# EUROPEAN PATENT APPLICATION

(11) **EP 1 672 891 A1**
(43) Date of publication of application: **21.06.2006**
(21) Application number: 04292997.6
(22) Date of filing: 14.12.2004
(51) Int. Cl.: H04M 3/42

(54) **Method for transferring messages**

(71) Applicant: ALCATEL, 75008 Paris (FR)
(72) Inventor: Wajda, Wieslawa, Dipl.-Ing., 75210 Keltern (DE); Weiss, Manfred, Dipl.-Ing., 75242 Neuhausen (DE)
(74) Representative: Zinsinger, Norbert

(57) **Abstract**

The present invention relates to a method and a network server (4) for transferring a message (32, 33, 34) initiated by a message initiator (21) via a communication network (1) to at least one message receiver (24, 26, 28). The network server (4) comprises a sentence builder (43), a service characteristic data base (47), a subscriber profile data base (46), an execution module (45) and a service quality measurement module (44). The sentence builder (43) analyses a service request message (31) received from the message initiator and builds and fills a data structure (51) from the service request message (31) based on the analyses. The execution module (45) recognizes a service, collects additional data and completes the data structure (51) with additional data, correlates profiles of registered peers (52) and service specific criteria (53) with the data of the data structure (51), dynamically selects a group of peers (24, 27, 28) based on such matching of peers and sends messages (32, 33, 34) to each peer (24, 26, 28) of the group.

## Description

The present invention relates to a method and a network server for transferring a message initiated by a message initiator via a communication network to at least one message receiver.

Today, cellular radio networks are widely used by private and business users. Such networks typically provide a full duplex point-to-point voice communication service between a calling and a called communication partner.

Further, in mobile telecommunication networks such as GSM networks (GSM = Global System for Mobile Communications) the exchange of short messages between mobile terminals by means of the short message service (= SMS) has grown considerably. As intentionally developed, short messages include only text, without any multi-media data such as pictures or video. Several technologies are developed to extend the short message service to multi-media data, for example the enhanced message service (= EMS) as described in the 3GPP recommendation TS23.040 or the multi-media messaging service (= MMS) described in the 3GPP recommendation TS23.140. The multi-media messaging service is a service where messages with multi-media elements of different types (e.g. still image, audio, video) and different formats (with respect to still image: e.g. jpg or GIF) can be exchanged between mobile terminals via network components or directly with each other. MMS is a peer-to-peer messaging service between two MMS user's agents or between a MMS user agent and a third party value-added-service provider which are both connected to a MMS relay server.

These message services allow quick sending and receiving of messages between two or more dedicated communication partners.

Further, communication services are known that supports contacts with other people. For example, US 2004/006548 A1 describes a server of a telecommunication network, wherein the server contain a data base having information on persons looking to meet other persons. Using telephones, users can input information both in regard to a person looking to meet another person and of a desired person. The server receives such personal information, stores it in the data base and compares the person information with the data stored in the data base to find persons, the information of whom complies with the received information on the desired person. The server determines a list of such persons and transmits it to the requesting telephone. The list can be shown on the display thereof. On the telephone a selection of a person in the transmitted list can be made and information on the selected person is transmitted to the server. The server establishes a telephone connection between the telephone of the person looking to meet another person and the telephone of the selected person.

It is the object of the present invention to improve the provision of services to subscribers of a telecommunication network.

The object of the present invention is achieved by a method of transferring a message initiated by a message initiator via a communication network to at least one message receiver wherein the method comprises the steps of: receiving, at a network server, a service request message transferred via a communication network from the method initiator to the network server; analyzing the service request message; building and filling a data structure from the service request message based on the analyzes; recognizing a service requested by the service request message; collecting additional data and completing the data structure; correlating profiles of registered peers and service specific criteria with the data of the data structure; dynamically selecting a group of peers based on such matching of peers; and transferring messages from the network server to each peer of the group. The object of the present invention is further achieved by a network server for transferring a message initiated by a message initiator to at least one message receiver, wherein the network server comprises a sentence builder for analyzing a service request message received via a communication network from the message initiator, for building and filling a data structure from the service request message based on the analyzes; a service characteristic data base storing profiles of different services with their particular criteria; a subscriber data base storing profiles of registered peers; an execution module for recognizing a service, for collecting additional data and completing the data structure with additional data, for correlating profiles of registered peers and service specific criteria with the data of the data structure, for dynamically selecting a group of peers based on such matching of peers and for sending messages from the network server to each peer of the group.

The invention builds a dynamic group creation service and platform for informal communication which allows initiating and performing other services based on short- and long-term social-emotion relations between group members. The dynamical created group participates in a service initiated by the group. The concept of the invention makes it possible to process, coordinate an initiate the service provisioning in a very flexible and efficient manner and thereby saves processing power as well as decrease the implementation time necessary to adapt the system to new kinds of services and communication modalities.

Further advantages are achieved by the embodiments of the invention indicated by the dependent claims.

According to a preferred embodiment of the invention, a network server automatically creates the messages transferred to the peers of the group from the data structure. Preferably, the execution module comprises a service data initializer that obtains all missing data that are necessary to execute the service and fills the data structure with such additional information. The automatically created messages contains beside information extracted from the service request message (that is optionally rearranged) additional information that is missing within the original service request message but necessary for the addressed peers to support the provisioning of the service.

The service request message can be written or spoken using natural language or it can be entered with help of a predefined input form. Preferably, the sentence builder analyzes the service request message sent by the message initiator by means of a lex, syntax and semantic analyzer. The semantic analyzes is preferably based on a chosen domain ontology.

Preferably, the sentence builder comprises a query analyzer arranged to deconstruct a natural language sentence of the service request message in word entities, parse and analyze the natural language sentence semantically, transform it into the data structure, if the sentence is valid, and fill the data structure with extracted word entities.

Preferably, the sentence builder extracts information from the received service request message that is necessary for selecting a group of peers from that of all possible communication partners. A communication partner, i.e. a peer is a computer or another kind of terminal in the communication network, wherein preferably at least a person uses said computer or terminal.

According to a preferred embodiment of the invention, the execution module comprises a service data initializer that obtains all missing data that are necessary to perform a service specific selection of peers. The data initializer optionally gathers all additional information necessary for service execution. The data structure is extended with this additional information that is important for subsequent service provisioning. The additional information can be gathered from other hardware and software components, for example position information can be get from a global positioning system or a localization server. Preferably, the information extracted from the service request message and the gathered additional information will be composed to a standardized data structure. The information in the data structure constitutes a basis for the creation of subsequent services.

According to a preferred embodiment of the invention, the execution module has a profile selector module that performs the dynamic selection of peers. Connected peers are potentially group members. Each peer has a profile where his preferences, qualities and other characteristic information are stored. Matching of peers based on the data structure connected before, profiles of the peers and special service criteria, where weighed coefficients are assigned to profile items regarding their importance for the service. Preferably, the profile selector module supports peer selection by neural networks. A neural network supports peer selection in a stochastic environment. It attempts to learn which peers (users) are better predestinated to create a closed group and to better perform in the execution process of the service. Thanks to learning potential of a neural network system will be capable to produce high-quality results in situations where static selection algorithms fails.

Further the profile selector module comprises beside such neural network in addition a static profile comparator which supports the peer selection process.

According to a preferred embodiment of the invention, the network server comprises in addition a service quality measurement module. The service quality measurement module rates the quality of peers that took place in a service and hand over a service quality vector containing rated peers to the execution module.

According to a preferred embodiment of the invention, the profile selector module compares peer profiles with information of the data structure and exclude peers that do not comply, match the remaining peers based on a service characteristic vector, a service quality characteristic vector and information of the data structure and determines a peer list of best suited peers based on the matching. Further, the execution module comprises at least one service execution module that starts and controls the execution of a service, stores peer data that is necessary to analyze the quality of the peer service contribution and hands over these data after termination of the service to the service quality measurement module. Further, the execution module comprises a service scheduler that selects responsible service execution modules.

These as well as other features and advantages of the invention will be better appreciated by reading the following detailed description of presently preferred exemplary embodiments taken in conjunction with accompanying drawings, of which:
- Fig. 1: is a block diagram showing a communication system with a network server according to the invention.
- Fig. 2: is a functional view of a component of the network server of Fig. 1.
- Fig. 3: is a functional view of a further component of the network server of Fig. 1.

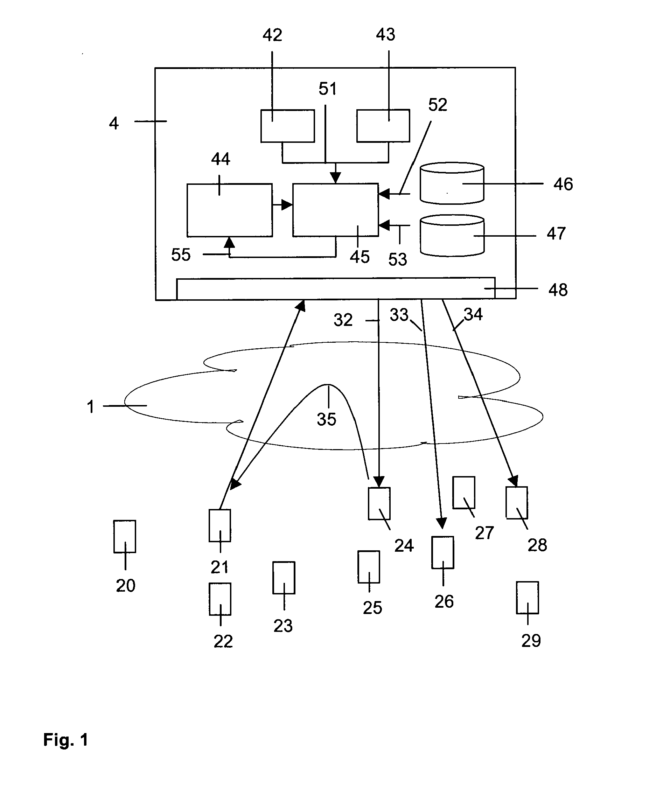

Fig. 1 shows a communication network 1, a network server 4 and a plurality of peers 20 to 29.

The communication network 1 is a communication network capable to enable a synchronous or asynchronous communication between the peers 20 to 29 and the network server 4. Preferably, the communication network 1 is a mobile communication or cellular phone network, for example according to the GSM or UMTS standard. According to a further embodiment the communication network 1 is a data network, preferably an IP-network (IP = Internet Protocol). Such network may be composed of various physical sub-networks, for example ATM-networks and wireless access networks interlinked via a common level 3 IP communication layer. Preferably, the communication network 1 provides a wireless, IP based communication server. It comprises one or more cellular radio networks which supports the transfer of packetized information via "always on" connections. For example, such wireless communication network is a GSM network supporting a GPRS service (GPRS = General Packet Radio Service) which makes it possible for the peers 20 to 29 to exchange in addition to "normal" "voice traffic" packet switched data traffic via the radio interface. Further, UMTS, EDGE, or 4G networks may support IP based packet switching service.

The peers 20 to 29 are terminals, e.g. mobile phones, PDAs (= Personal Digital Assistant) or computers having a communication capabilities to communicate with the network server 4 via the communication network 1. Various communication services might be used by the peers 20 to 29 to send a service request message to the network server 4. For example, the service request message is a spoken natural language message sent from the peer 20 to the network server 4. For example, the peer 22 is a computer executing an e-mail-application and the service request message is an e-mail containing written natural language. For example the peer 23 is a PDA and the service request message sent from the peer 23 to the network server 4 is a SMS or MMS message that contains written or spoken natural language. Further, it is possible that the peer 23 executes a browser application interacting with a corresponding server application of the network server 4 and the service request message is a XHTML, HTML or WAP message containing the content of a input mask filled by the user of the peer 23 (HTML = Hyper Text Markup Language; XHTML = Extended Hyper Text Markup Language, WAP = Wireless Application Protocol).

According to a preferred embodiment of the invention, the network server 4 provides an IP-based push-to-talk service. For example, the peer 21 is a mobile phone having access to a packet switched radio communication service (e.g. GPRS). The peer 21 executes a push-to-talk client that handles the client part of the push-to-talk service. The service request message sent from the peer 21 to the network service 4 contains data of an input mask or a written or spoken natural language text inputted by the user of the peer 21. The push-to-talk client comprises functionalities to transfer media streams via an IP based communication network, e.g. functionalities to handle the RTP and the SIP protocol stacks (RTP = Real Time Protocol; SIP = Session Initiation Protocol).

The network server 4 is constituted of one or several interlinked computers, a software platform and various application programs executed on the system platform provided by the aforementioned hard- and software platform. The functionalities of the network server 4 are performed by the execution of these software components by the hardware components of the network server 4. From functional point of view, the network server 4 comprises a communication unit 48, a subscriber data base 46, a service characteristic data base 47, a sentence builder comprising query analyzers 42 and 43, an execution module 45 and a service quality measurement module 44.

The communication module 48 represents hardware- and software components of the network server 4 that support the communication service with the peers 20 to 29. For example, the communication module 48 contains components to execute the TCP/IP, HTTP or RTP/SIP protocol stacks. Further, the communication unit 48 optionally contains functionalities for modality conversion, for example speech recognition module or a text to speech conversion module.

The subscriber data base 46 stores subscriber profiles of peers registered to the network server 4. The subscriber profiles contains characteristic information of the corresponding subscriber, for example name, age, personal situation, cars, attitudes (for example that the subscriber regularly drives a specific route) as well as preferences of the respective subscriber.

The service characteristic data base stores profiles of different services that might be provided within a group of peers. The service characteristic data base 47 contains the different services with their particular criteria. Each criteria of a service is assigned to a special weight regarding its importance on the service. The service characteristic data base sends on demand a service characteristic vector 52 containing the weighted criteria of a service to the execution module 45.

Input of the sentence builder is a written message of one of the peers 20 to 29 provided by the communication module 48. The message can be in form of natural language input or it can be data of an input mask. Both inputs are converted by the query analyzers 43 and 42, respectively, to a data structure 51. The query analyzer 43 deconstructs an incoming natural language sentence in word entities, parse and analyze the incoming natural language sentence. If the sentence is valid, the query analyzer 43 transforms it into the data structure 51. In case of an input mask, the query analyzer 42 transforms the data structure in a standard data structure, removes blanks and other redundant space and creates a valid data structure.

The service quality measurement module 44 rates the quality of peers that took part in a service. The peers are rated in consideration of their usefulness for the services and for the users. The service quality measurement module hands a service quality vector 54 over to the execution module 45. The service quality vector 54 contains the quality rated peers.

The execution module 45 recognizes one or more services contained in the data structure 51, collects additional data and completes the data structure with said additional data. Preferably, it recognizes the services stored in the data structure and gets additional information that is necessary for the realization of these services. Further, the execution module correlates profiles of registered peers and service specific criteria received from the subscriber data base 46 and the service characteristic data base 47 with the data of the data structure. Optionally, the correlation process uses the service quality vector 54 received from the service quality measurement module as additional input parameter. Then, the execution module dynamically selects a group of peers based on the matching of peers by the correlation process. Furthermore a service execution module according to the recognized service is activated. Then, the execution module 45 subsequently sends information 55 containing the resulting peer list of a service and additional information gained from the service execution module of a terminated service is from to the service quality measurement module 44.

For example, the network server 4 supports a bunch of services supporting search for parking sites, emergency calls, travel and traffic information, sales of tickets etc. A service request message 31 containing a natural language sentence is sent from a service initiator, e.g. the peer 21, through the communication network 1 to the network server 4. For example the sentence contains the question "Is there free parking place for my truck at a rest area for lunch time?". The query analyzer 43 statically and semantically analyzes this sentence, deconstructed into word entities and transforms it into a data structure, e.g. containing the word entities parking place, truck, lunch time. The execution module 45 recognizes from the data of these data structures that the query addresses a service "searching for parking places", e.g. through correlation with a keyword list assigning the phrase "parking place" to this kind of service.

Then, the execution module determines by hand of service characteristic data of this service missing data which has to be gathered for the realization of the service. For example, it fills the data structure with additional information from the subscriber profile of the peer requesting the service. For example, it adds the length of the truck. Further, it gathers additional information as time or position of the peer 21 from external sources, e.g. a GPS system or a localization service (GPS = Global Positioning System). Then, it correlates the extended data structure with service characteristic data of the service retrieved from the service characteristic data base 47, subscriber profiles of the peers 20 to 28 retrieved from the subscriber profile data base 46 and the service quality vector 54 retrieved from the service quality measurement module 44. It dynamically selects a group of peers e.g. close to a rest area in the neighborhood of the peer 21 or indicated in the user profile to have knowledge about such subject and indicated by the service quality vector as peers showing good support for such kind of service query. Then, the execution module builds up a push-to-talk communication group with the requesting peer 21 and the peers of the created group, e.g. the peers 24, 26 and 28. It creates messages 32, 33 and 34 from the data structure that contain all necessary information necessary to respond the query of the peer 21, e.g. that the peer 21 searches a parking place for a truck with the length of 12 meters at lunch time at one of the following rest areas x,y,z. If one of the users of the peers 24, 26 and 28 intends to support the user of the peer 21 in a search, it presses, for example a push-to-talk button and the network server 48 automatically establishes a (undirectional) communication connection between these peers. For example the user of the peer 24 presses this button and the network server 4 establishes an VoIP based push-to-talk communication connection 35 between the peers 24 and 21.

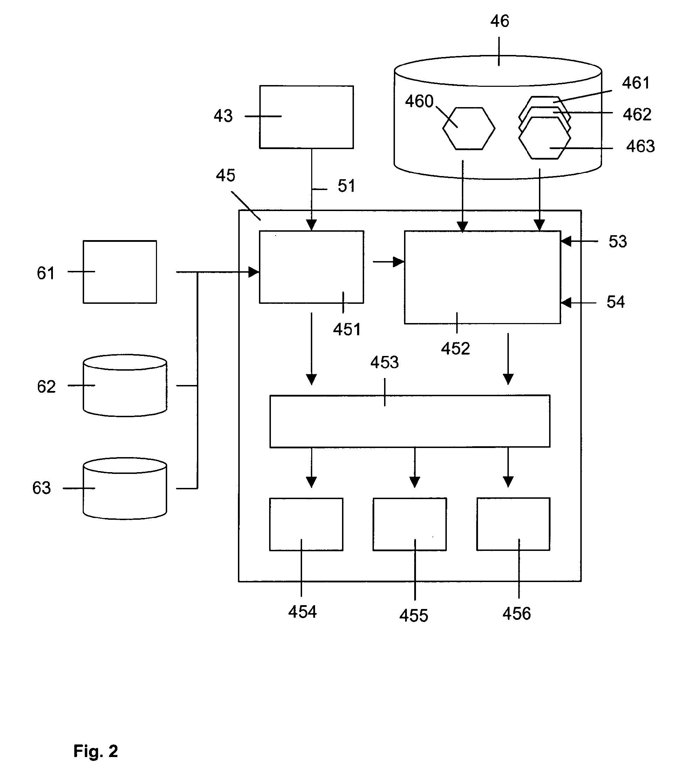

In the following, details of the execution module 45 are exemplified by hand of Fig. 2.

Fig. 2 shows the execution module 45, the query analyzer 43, the subscriber data base 46 and a plurality of components 61 to 63 feeding the execution module 45 with additional information.

For example, the component 61 is a service determining the present position of one or more subscribers registered in the subscriber profile data base 46, the component 62 is a data base containing traffic information, map and traffic route data and the component 63 is a data base storing weather information.

Fig. 2 shows some of the subscriber profiles stored by the subscriber profile data base 46, namely a subscriber profile 460 of the subscriber that requests a service and subscriber profiles 461 to 463 of peers capable and willing to participate in provisioning of a service.

The execution module 45 contains a service data initializer 451, a profile selector module 452, a service scheduler 453 and a plurality of service execution modules 454, 455 and 456.

Based on the information of the data structure 51 the service data initializer 451 determines the ID of the service indicated by the content of the data structure 51. Further, it completes the data structure 51 with additional information gathered by means of external components, e.g. the components 61, 62 and 63. For example, the service data initializer 451 uses the components 61 to determine the position of the user. The ID of the service and the extended data structure are hand over to the service scheduler 453.

The inputs of the profile selector module 452 are subscriber profiles 460 to 463, the extended data structure from the service data initializer 451, the service characteristic vector and the service quality vector. The profile selector module 452 determines a peer list that contains best suited peer for the service. The service characteristic vector that contains the important criteria of the service influences the determination of the peer list. Furthermore, the profile selector module comprises a combination of a static profile comparator and a neural network to be capable to provide user results from the beginning and also in order to dynamically improve the quality of selection and bring out the best matching peers.

Based on the service ID, the extended data structure and the peer list, the service scheduler 453 selects the responsible service execution module. A specific service execution module, for example the service execution module 454, is started and the extended data structure and the peer list are transferred to it. Each service has its own service execution module. The service execution module starts and controls the execution of a service. During the execution the module stores relevant peer data that is necessary to analyze the quality of the peers. After termination of this service, these peer quality data is hand over to the service quality measurement module 44.

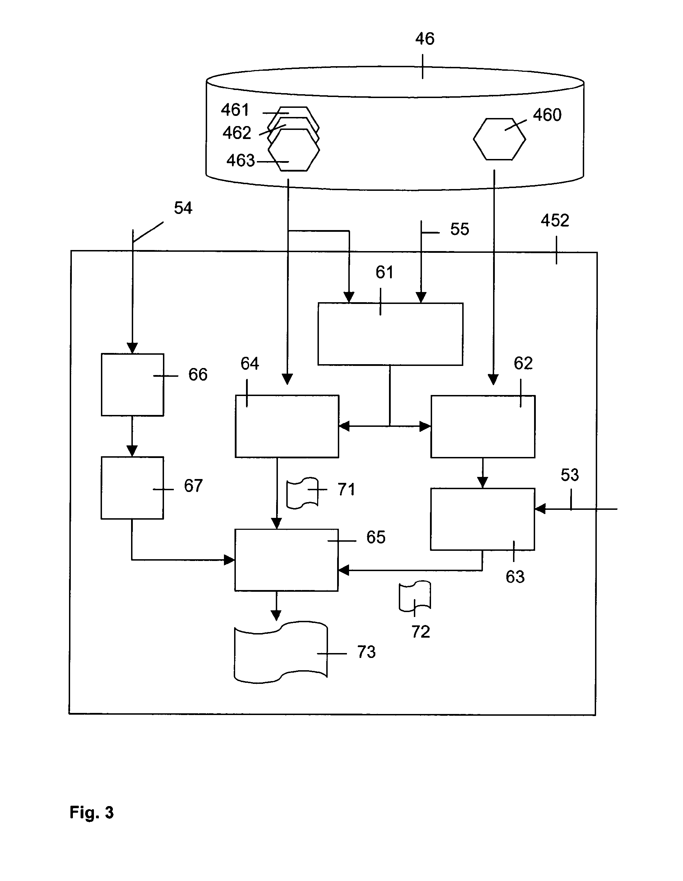

Fig. 3 exemplifies an implementation of the profile selector module 452. Fig. 3 shows the profile selector module 452 and the subscriber profile data base 46 with the subscriber profiles 460, 461, 462 and 463.

The profile selector module 452 comprises a comparator 61, a proximity comparator 62 a ranking calculator 63, a neural network 64, a peer selector 65, a coefficient calculator 66 and a service quality controller 67.

The comparator 61 compares the content of the subscriber profile 461 to 463 with the information of the extended data structure 55 provided by the service data initializer 451. Peers that do not comply with the information of a data structure are excluded from further research. The remaining peers are collected in a list and hand over to the proximity comparator 62 and the neural network 64.

The proximity comparator 62 compares the elements of the own subscriber profile 460 with elements of the profiles of the remaining peers. This vector is passed to the ranking calculator 63.

The ranking calculator 63 identifies for each peer a scalar coefficient, by calculating the elements of the remaining peers weighed by the service characteristic vector 53. The resulting peer coefficient list 72 contains the remaining peers ordered by their proximity rating.

The neural network 64 is feeded with the peer list from the comparator 61, the service characteristic vector from the service characteristic data base 47 and the subscriber profile of the subscriber profile data base 46. The neural network 64 selects the peers that are best qualified for the execution of a service. The advantage of the neural network 64 is to highlight similarities between profiles. The neural network generates a peer coefficient list 71 in which the peers are rated according to the recognized similarities. The coefficient calculator 66 calculates a coefficient defining the success of the recent selected peer list. The service quality control 67 calculates a straightened function of the qualities coefficients. The straightened function is calculated for both peer lists, the peer list created by the neural network 64 and the peer list of the ranking calculator 63.

The peer selector 65 gets the proximity peer list 72 and the peer list 71 of the Kohonen network, i.e. the neural network 64. Controlled by the service quality controller 67, the peer selector 65 selects the peer lists with the better results that is best qualified for the execution of a service. Then it passes this peer list, namely the peer list 73, to the service schedule 453.

## Claims

1. A method of transferring a message initiated by a message initiator (21) via a communication network (1) to at least one message receiver (24, 26, 28), the method comprising the steps of:
receiving, at a network server (4), a service request message (31) transferred via a communication network (1) from the message initiator (21) to the network server (4);
analyzing the service request message (31);
building and filling a data structure (51) from the service request message (31) based on the analyses;
recognizing a service requested by the service request message (31); collecting additional data and completing the data structure (51); correlating profiles (52) of registered peers (20 to 29) and service specific criteria (47) with the data of the data structure (51);
dynamically selecting a group of peers (24, 26, 28) based on such matching of peers; and
transferring messages (32, 33, 34) from the network server (4) to each peer of the group.

2. The method of claim 1,
**characterized in**
**that** the method comprises the further step of creating the messages (32, 33, 34) transferred to the group from the data structure (51).

3. A network server (4) for transferring a message (32, 33, 34) initiated by a message initiator (21) to at least one message receiver (24, 26, 28), the network server comprising: a sentence builder (43) for analyzing a service request message (31) received via a communication network (1) from the message initiator (21), and for building and filling a data structure (51) from the service request message (31) based on the analyses; a service characteristic data base (47) storing profiles of different services with their particular criteria; a subscriber data base (46) storing profiles of registered peers (20 to 29); and an execution module (45) for recognizing a service, for collecting additional data and completing the data structure (51) with additional data, for correlating profiles (52) of registered peers and service specific criteria (53) with the data of the data structure (51), for dynamically selecting a group of peers (24, 26, 28) based on such matching of peers, and for sending messages (32, 33, 34) from the network server to each peer (24, 26, 28) of the group.

4. The network server of claim 1,
**characterized in**
**that** the sentence builder comprises a query analyzer (43) arranged to deconstruct a natural language sentence of the service request message (31) in word entities, parse and analyze the natural language sentence semantically, transform it into the data structure (51), if the sentence is valid, and fill the data structure (51) with extracted word entities.

5. The network server (4) of claim 3,
**characterized in**
**that** the network server (4) comprises a service quality measurement module (44) arranged to rate the quality of peers that took place in a service and hand over a service quality vector (54) containing the rated peers to the execution module (45).

6. The network server of claim 3,
**characterized in**
**that** the execution module (45) comprises a service data initializer (451) arranged to obtain all missing data that are necessary to perform a service specific selection of peers.

7. The network server of claim 3,
**characterized in**
**that** the execution module comprises a service data initializer (451) arranged to obtain all missing data that are necessary to execute the service.

8. The network server of claim 3,
**characterized in**
**that** the execution module (45) comprises a profile selector module (452) arranged to compare peer profiles (460 to 463) with the information of the data structure and exclude peers that do not comply, match the remaining peers based on a service characteristic vector (53), a service quality characteristic vector (54) and information of the data structure, and to determine a peer list (73) of best suited peers based on the matching.

9. The network server of claim 8,
**characterized in**
**that** the profile selector module (452) comprises a static profile comparator (61) and a neural network (64) for matching of peers.

10. The network server (4) of claim 5,
**characterized in**
**that** the execution module (45) comprises at least one service execution module (454 to 456) arranged to start and control the execution of a service, store peer data that is necessary to analyze the quality of the peer's service contribution and hand over these data after termination of the service to the service quality measurement module (44), and a service scheduler (453) for selection of responsible service execution modules.
